# EUROPEAN PATENT APPLICATION

(11) **EP 4 586 616 A1**
(43) Date of publication of application: **16.07.2025**
(21) Application number: 23862230.2
(22) Date of filing: 29.08.2023
(51) Int. Cl.: H04N 21/234

(54) **METHOD AND APPARATUS FOR PROCESSING LIVE-STREAMING IMAGE FRAME, AND DEVICE, READABLE STORAGE MEDIUM AND PRODUCT**

(30) Priority: 06.09.2022 CN 202211086343
(71) Applicant: Beijing Zitiao Network Technology Co., Ltd., Beijing 100190 (CN)
(72) Inventor: CHEN, Yongzhan, Beijing 100028 (CN); JIANG, Linjun, Beijing 100028 (CN); LUO, Jiajia, Beijing 100028 (CN)
(74) Representative: Dentons UK and Middle East LLP
(86) International application number: PCT/CN2023/115615
(87) International publication number: WO 2024/051535

(57) **Abstract**

Embodiments of the present disclosure provide a method and an apparatus for processing a live streaming image frame, an electronic device, a computer-readable storage medium, a computer program product, and a computer program. The method includes: acquiring an image frame processing request; acquiring, according to the image frame processing request, a live streaming image frame corresponding to virtual reality live streaming content; determining an area to be processed in the live streaming image frame, and performing a first processing operation on the area to be processed, to obtain an image frame to be processed; performing, according to a first color lookup table corresponding to the live streaming image frame, a second processing operation on the image frame to be processed, to obtain a processed target image frame; and displaying the target image frame. In this way, an image frame processing operation in a virtual reality scenario can be implemented. In addition, the first processing operation is performed on the area to be processed, and the second processing operation is performed on the whole, so that a calculation amount in an image processing process can be effectively reduced, and efficiency of an image beautifying operation is improved. Therefore, a high-quality live streaming effect can be ensured.

## Description

### CROSS-REFERENCE TO RELATED APPLICATION

The present application claims priority to Chinese Patent Application No. 202211086343.5, filed with the China National Intellectual Property Administration on September 6, 2022 and entitled "METHOD AND APPARATUS FOR PROCESSING LIVE STREAMING IMAGE FRAME, DEVICE, READABLE STORAGE MEDIUM, AND PRODUCT", which is incorporated herein by reference in its entirety.

### TECHNICAL FIELD

Embodiments of the present disclosure relate to the technical field of image processing, and in particular, to a method and an apparatus for processing a live streaming image frame, an electronic device, a computer-readable storage medium, a computer program product, and a computer program.

### BACKGROUND

During a live streaming process, in order to obtain a better live streaming effect, an optimization operation on live streaming content may be performed by using a beautifying technique according to a trigger operation of a user. An existing beautifying technique may be applied to a PC end and a mobile end, to implement a beautifying operation in a 2D scenario.

With the development of technologies, virtual reality (VR) technologies are gradually applied to the lives of users. The users may implement 3D VR live streaming by using the VR technologies. However, the existing beautifying technique cannot implement a beautifying operation in a VR scenario.

### SUMMARY

The embodiments of the present disclosure provide a method and an apparatus for processing a live streaming image frame, an electronic device, a computer-readable storage medium, a computer program product, and a computer program, to solve a technical problem that the existing beautifying technique cannot implement an image optimization operation in a VR scenario.

In a first aspect, an embodiment of the present disclosure provides a method for processing a live streaming image frame, including:
acquiring an image frame processing request;
acquiring, according to the image frame processing request, a live streaming image frame corresponding to virtual reality live streaming content;
determining an area to be processed in the live streaming image frame, and performing a first processing operation on the area to be processed, to obtain an image frame to be processed;
performing a global second processing operation on the image frame to be processed, to obtain a processed target image frame; and
displaying the target image frame.

In a second aspect, an embodiment of the present disclosure provides a system for processing a live streaming image frame, including: a terminal device, a binocular image acquisition apparatus, and a virtual reality device, where
the binocular image acquisition apparatus is configured to acquire a live streaming image frame corresponding to virtual reality live streaming content;
the terminal device is configured to acquire an image frame processing request, and acquire, according to the image frame processing request, the live streaming image frame corresponding to the virtual reality live streaming content; determine an area to be processed in the live streaming image frame, and perform a first processing operation on the area to be processed, to obtain an image frame to be processed; perform a global second processing operation on the image frame to be processed, to obtain a processed target image frame; and send the target image frame to the virtual reality device; and
the virtual reality device is configured to display the target image frame.

In a third aspect, an embodiment of the present disclosure provides an apparatus for processing a live streaming image frame, including:
an acquiring module, configured to acquire an image frame processing request;
an image frame acquiring module, configured to acquire, according to the image frame processing request, a live streaming image frame corresponding to virtual reality live streaming content;
a determining module, configured to determine an area to be processed in the live streaming image frame, and perform a first processing operation on the area to be processed, to obtain an image frame to be processed;
a processing module, configured to perform a global second processing operation on the image frame to be processed, to obtain a processed target image frame; and
a sending module, configured to display the target image frame.

In a fourth aspect, an embodiment of the present disclosure provides an electronic device, including: a processor and a memory, where
the memory stores a computer-executable instruction; and
the processor executes the computer-executable instruction stored in the memory, to enable the at least one processor to perform the method for processing a live streaming image frame according to the first aspect and various possible designs of the first aspect.

In a fifth aspect, an embodiment of the present disclosure provides a computer-readable storage medium storing a computer-executable instruction that, when executed by a processor, implements the method for processing a live streaming image frame according to the first aspect and various possible designs of the first aspect.

In a sixth aspect, an embodiment of the present disclosure provides a computer program product including a computer program that, when executed by a processor, implements the method for processing a live streaming image frame according to the first aspect and various possible designs of the first aspect.

In a seventh aspect, an embodiment of the present disclosure provides a computer program that, when executed by a processor, implements the method for processing a live streaming image frame according to the first aspect and various possible designs of the first aspect.

### BRIEF DESCRIPTION OF DRAWINGS

In order to more clearly describe technical solutions in the embodiments of the present disclosure or the prior art, drawings for describing the embodiments or the prior art will be briefly described below. It is apparent that the drawings in the following description show some embodiments of the present disclosure, and a person of ordinary skill in the art may still derive other drawings from these drawings without creative efforts.
FIG. 1 is a structural diagram of a system for processing a live streaming image frame provided by an embodiment of the present disclosure.
FIG. 2 is a flow diagram of a method for processing a live streaming image frame provided by an embodiment of the present disclosure.
FIG. 3 is a flow diagram of a method for processing a live streaming image frame provided by another embodiment of the present disclosure.
FIG. 4 is a flow diagram of a method for processing a live streaming image frame provided by yet another embodiment of the present disclosure.
FIG. 5 is a structural diagram of an apparatus for processing a live streaming image frame provided by an embodiment of the present disclosure.
FIG. 6 is a structural diagram of an electronic device provided by an embodiment of the present disclosure.

### DESCRIPTION OF EMBODIMENTS

To make objectives, the technical solutions, and advantages of the embodiments of the present disclosure clearer, the technical solutions in the embodiments of the present disclosure are clearly and completely described below with reference to the drawings in the embodiments of the present disclosure. It is apparent that the described embodiments are some but not all of the embodiments of the present disclosure. All other embodiments obtained by a person of ordinary skill in the art according to the embodiments of the present disclosure without creative efforts shall fall within the protection scope of the present disclosure.

To solve the technical problem that an image optimization operation in a virtual reality scenario cannot be implemented in the prior art, the present disclosure provides a method and apparatus for processing a live streaming image frame, a device, a readable storage medium, and a product.

It should be noted that the method and apparatus for processing a live streaming image frame, the electronic device, the computer-readable storage medium, the computer program product, and the computer program provided in the present disclosure may be applied to any scenario of beautifying a live streaming image frame.

The existing beautifying technique is generally applied to a 2D scenario, and cannot implement a beautifying operation on a live streaming image frame in a virtual reality scenario.

During a process of solving the foregoing technical problem, the inventors have found through research that a system for processing a live streaming image frame including a terminal device, a binocular image acquisition apparatus, and a virtual reality device may be constructed. Based on the foregoing system for processing a live streaming image frame, the binocular image acquisition apparatus simultaneously acquires real-time image data (a single image: 4K) of a streamer from different angles, and combines two images into one 8K input image. Then, the input 8K image is inputted into the terminal device for face recognition and rendering processing. The terminal device may be specifically a personal computer (Personal Computer, abbreviated as PC) host. Then, a processed video image is pushed to the virtual reality device. Finally, a display client of the virtual reality device receives a live streaming video stream, and plays a 3D video. A user can view 3D live streaming that has undergone a beautifying processing.

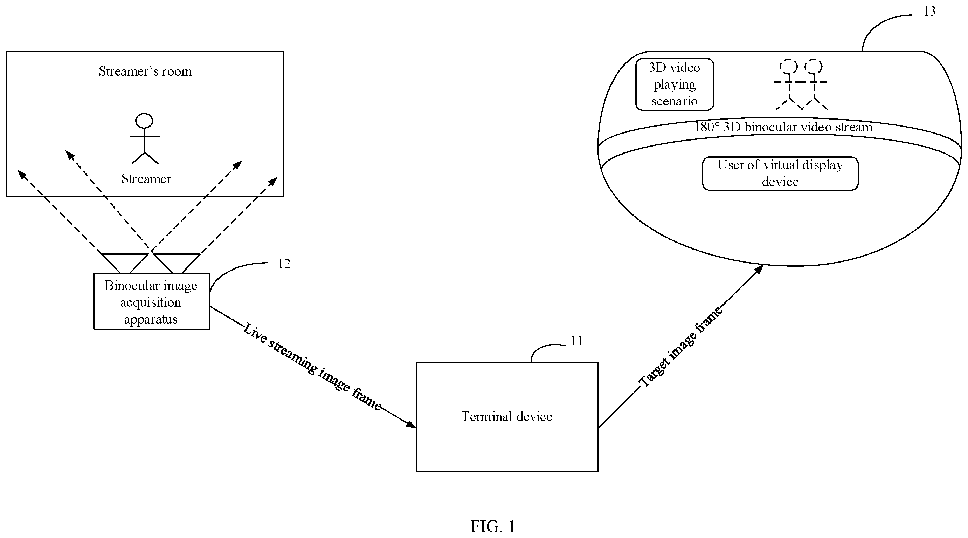

FIG. 1 is a structural diagram of a system for processing a live streaming image frame provided by an embodiment of the present disclosure. As shown in FIG. 1, the system for processing a live streaming image frame may include a terminal device 11, a binocular image acquisition apparatus 12, and a virtual reality device 13. The terminal device 11 is in communication connection with the binocular image acquisition apparatus 12 and the virtual reality device 13, and can exchange information with the binocular image acquisition apparatus 12 and the virtual reality device 13 respectively.

Based on the foregoing system architecture, the binocular image acquisition apparatus 12 is configured to acquire a live streaming image frame corresponding to virtual reality live streaming content;
the terminal device 11 is configured to acquire an image frame processing request, and acquire, according to the image frame processing request, the live streaming image frame corresponding to the virtual reality live streaming content; determine an area to be processed in the live streaming image frame, and perform a first processing operation on the area to be processed, to obtain an image frame to be processed; perform a second processing operation on the image frame to be processed, to obtain a processed target image frame; and send the target image frame to the virtual reality device 13; and
the virtual reality device 13 is configured to display the target image frame.

Based on the foregoing system architecture, a beautifying operation on a live streaming image frame in a 3D scenario can be implemented, so that a user can view 3D live streaming that has undergone a beautifying processing in the virtual reality device.

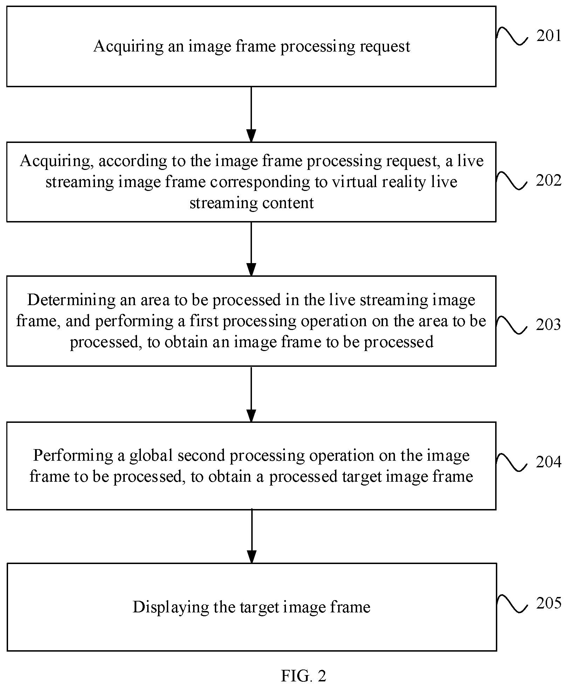

FIG. 2 is a flow diagram of a method for processing a live streaming image frame provided by an embodiment of the present disclosure. As shown in FIG. 2, the method includes following steps.

Step 201: acquiring an image frame processing request.

An execution subject of the present embodiment is a terminal device. The terminal device may be in communication connection with a binocular image acquisition apparatus and a virtual reality device respectively, and can exchange information with the binocular image acquisition apparatus and the virtual reality device. Optionally, the terminal device may be specifically a PC host. Alternatively, the terminal device may be any device capable of implementing image processing, which is not limited in the present disclosure.

Optionally, the terminal device may also be in communication connection with a device used by a user for live streaming. When the user performs virtual reality live streaming, a beautifying technique may be selected according to an actual requirement to perform a beautifying operation on live streaming content. Correspondingly, when it is detected that the user triggers a beautifying option on the terminal device, an image frame processing request may be generated according to the trigger operation, and the image frame processing request is sent to the terminal device.

In an implementable manner, a beautifying operation may also be automatically performed on the live streaming content when a live streaming operation triggered by the user is detected. When a live streaming starting operation of the user is detected, an image frame processing request may be automatically generated and sent to the terminal device.

Correspondingly, the terminal device may acquire the image frame processing request.

Step 202: acquiring, according to the image frame processing request, a live streaming image frame corresponding to virtual reality live streaming content.

In this implementation, when the image frame processing request is acquired, the live streaming image frame corresponding to the virtual reality live streaming content may be acquired.

In a virtual reality live streaming scenario, live streaming content is generally acquired by using the binocular image acquisition apparatus. The binocular image acquisition apparatus acquires real-time images of a streamer from different angles, and an output image size of each camera is 4K. Therefore, the live streaming image frame corresponding to the virtual reality live streaming content can be specifically acquired.

Step 203: determining an area to be processed in the live streaming image frame, and performing a first processing operation on the area to be processed, to obtain an image frame to be processed.

In this implementation, in a process of beautifying the live streaming image frame, a skin soothing operation and a whitening operation may be performed on a user in the live streaming image frame. However, since a live streaming image frame in a virtual reality live streaming scenario is usually large in size, a large amount of computation is required for a beautifying operation on the live streaming image frame.

To improve a speed of beautifying the live streaming image frame, when a skin soothing operation is performed on the user in the live streaming image frame, the skin soothing operation may be performed only on a face and exposed limbs of the user in the live streaming image frame, and no skin soothing operation is performed on other parts of the live streaming image frame.

Therefore, after the live streaming image frame is acquired, an identification operation may be first performed for the area to be processed in the live streaming image frame. Optionally, the area to be processed may be specifically a face and exposed limbs of the user in the live streaming image frame. Alternatively, in different application scenarios, if a request triggered by the user is a special effect processing request for a target part, for example, if the request triggered by the user is a special effect processing request for adding a sticker to a head, the area to be processed may be specifically the head of the user in the live streaming image frame.

After the identification of the area to be processed is completed, the first processing operation may be performed on the area to be processed to obtain the image frame to be processed. When the image frame processing request is a beautifying request, the first processing operation may be a skin soothing operation on the area to be processed.

Step 204: performing a global second processing operation on the image frame to be processed, to obtain a processed target image frame.

In this implementation, after the first processing operation on the area to be processed is completed, the global second processing operation may be performed on the image frame to be processed. When the image frame processing request is a beautifying request, the second processing operation may be specifically a whitening operation.

In an actual application, the image frame to be processed may include a background part in addition to the user. When the global second processing operation is performed on the image frame to be processed, optimization needs to be performed on both the user and the background part. Therefore, to ensure an optimization effect of the second processing operation, a second color lookup table (lut graph) corresponding to the live streaming image frame may be preset. Specifically, a lut graph corresponding to the live streaming image frame may be adjusted. During an adjustment process, a group of lut graphs that only affect a skin color and try to ensure that the background is not affected is determined, and the lut graphs are used as the second color lookup table.

Further, a global color mapping operation may be performed on the image frame to be processed according to the first color lookup table, to complete the second processing operation on the image frame to be processed and obtain the processed target image frame.

The global second processing operation on the image frame to be processed may be specifically image processing on the entire image frame to be processed.

Step 205: displaying the target image frame.

In the present embodiment, after the optimization operation on the live streaming image frame is completed, the target image frame may be displayed.

Optionally, the target image frame may be sent to a preset terminal device for display, so that the user can view 3D live streaming that has undergone beautifying processing on the preset terminal device. Optionally, the preset terminal device may be specifically a virtual reality device.

Alternatively, after the target image frame is obtained, a preset display interface in the terminal device may be controlled to display the target image frame.

Further, based on any one of the foregoing embodiments, step 202 includes:
acquiring two image frames to be combined that are acquired by at least two cameras; and
performing a combining operation on the two image frames to be combined, to obtain the live streaming image frame.

In the present embodiment, the two image frames to be combined that are acquired by the at least two cameras may be acquired, where an image size of each image frame to be combined is 4K. To facilitate subsequent optimization operations on the live streaming image frame, the image frames to be combined from two angles may be combined left and right into one 8K live streaming image frame. The combined 8K live streaming image frame is directly inputted into the terminal device for special effect processing, and does not need to be processed for anti-distortion.

Optionally, the two cameras may be specifically two cameras provided on the binocular image acquisition apparatus. Specifically, two image frames to be combined that are acquired by the two cameras in the binocular image acquisition apparatus may be acquired.

In the method for processing a live streaming image frame provided in the present embodiment, the live streaming image frame corresponding to the virtual reality live streaming content is acquired according to the image frame processing request, the first processing operation is performed on the area to be processed in the live streaming image frame, the global second processing operation is performed on the image frame to be processed after the first processing operation, and the target image frame after the second processing operation is sent to the virtual reality device for display, so that an image processing operation in a virtual reality scenario can be implemented. In addition, the first processing operation is performed on the area to be processed and the second processing operation is performed on the entire image, so that an amount of computation in an image processing process can be effectively reduced, improving efficiency of image processing, and ensuring a high-quality live streaming effect.

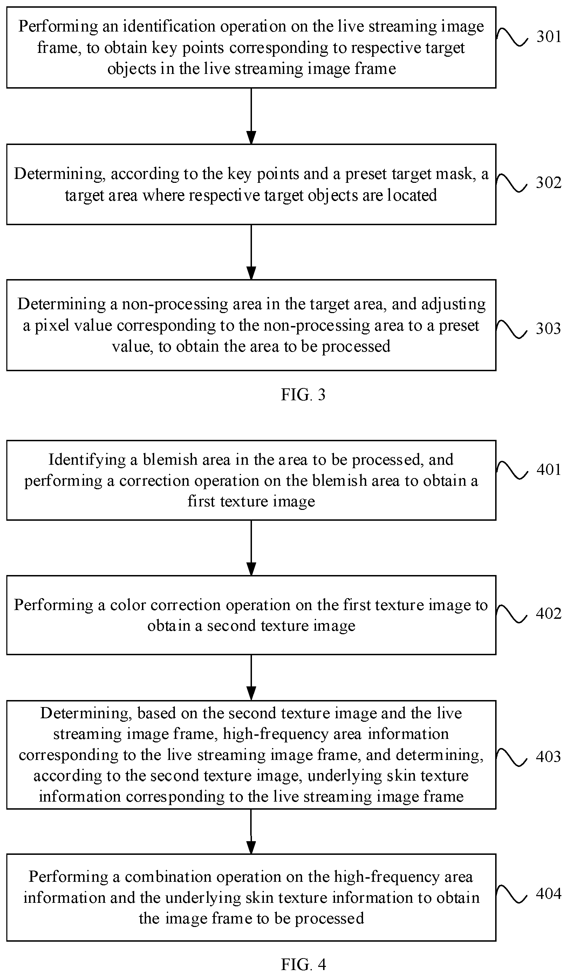

FIG. 3 is a flow diagram of a method for processing a live streaming image frame provided by another embodiment of the present disclosure. Based on any one of the foregoing embodiments, as shown in FIG. 3, step 203 includes following steps.

Step 301: performing an identification operation on the live streaming image frame, to obtain key points corresponding to respective target objects in the live streaming image frame.

Step 302: determining, according to the key points and a preset target mask, a target area where respective target objects are located.

Step 303: determining a non-processing area in the target area, and adjusting a pixel value corresponding to the non-processing area to a preset value, to obtain the area to be processed.

In the present embodiment, after the live streaming image frame is acquired, the identification operation may be performed for the key points in the live streaming image frame by using a preset key point identification algorithm, to obtain the key points corresponding to respective target objects in the live streaming image frame. It should be noted that since the input live streaming image frame is obtained by combining the two image frames to be combined from the left and right angles, if there are N target objects in the image frames to be combined, facial key points corresponding to 2N target objects are detected in the live streaming image frame, and 2N groups of facial key points are output.

Further, the target area where respective target objects are located may be determined according to the key points and a preset target mask. The target mask includes a plurality of layers, and different layers respectively record areas such as eyebrow, nostril, mouth, and eye.

It may be understood that during a first beautifying operation, the first beautifying operation usually needs to be performed on a skin area of the user. Therefore, to improve a subsequent optimization effect and reduce a subsequent amount of computation, the non-processing area in the target area may be determined. A deletion operation is performed on the non-processing area to obtain the area to be processed. The non-processing area includes but is not limited to positions such as hair, eyes, and eyebrows of the user.

Optionally, to implement the deletion operation on the non-processing area, the pixel value of the non-processing area may be specifically adjusted, and the pixel value of the non-processing area is adjusted to the preset value, to obtain the area to be processed.

In the method for processing a live streaming image frame provided in the present embodiment, the key points in the live streaming image frame are identified, and the target area where target objects are located are determined according to the key points. Therefore, the first beautifying operation can be performed based on the target area, reducing a range of the first beautifying operation and reducing an amount of computation for beautifying the live streaming image frame.

Further, based on any one of the foregoing embodiments, step 303 includes:
converting the live streaming image frame from an RGB image to an HSV image, and determining a first non-processing area in the target area based on a hue and a value of the HSV image as constraint information;
determining a second non-processing area in the target area by adjusting a layer corresponding to the target mask; and
setting pixel values corresponding to the first non-processing area and the second non-processing area in the target area to zero, to obtain the area to be processed.

In the present embodiment, to implement the deletion operation on the non-processing area, the live streaming image frame is first converted from an RGB image to an HSV image. HSV (Hue, Saturation, Value) is a color space created according to intuitive characteristics of colors. By using the hue and the value of the HSV image as the constraint information, the first non-processing area that is different from skin of the user can be screened out. The first non-processing area includes but is not limited to non-skin areas such as hair and glasses.

Further, the target mask may include a plurality of layers, and different layers respectively record areas such as eyebrow, nostril, mouth, and eye. The second non-processing area in the target area may be screened out by adjusting different layers of the target mask. The second non-processing area includes but is not limited to areas such as eyes, nostrils, and a mouth.

After the first non-processing area and the second non-processing area are determined respectively, the first non-processing area and the second non-processing area in the target area may be deleted, to obtain the area to be processed that includes only a skin part.

Optionally, the pixel values corresponding to the first non-processing area and the second non-processing area may be adjusted to zero, to implement the deletion operation on the first non-processing area and the second non-processing area.

In the method for processing a live streaming image frame provided in the present embodiment, the deletion operation is performed on the first non-processing area and the second non-processing area in the target area, so that the range of the first beautifying operation can be further reduced, the amount of computation for beautifying the live streaming image frame is effectively reduced, the efficiency of beautifying the live streaming image frame is improved, and a high-quality live streaming effect can be ensured.

Further, based on any one of the foregoing embodiments, step 203 includes:
determining a facial area in the live streaming image frame; and
performing the first processing operation on at least one of a blemish area, a shadow area, and a highlight area in the facial area, to obtain the image frame to be processed.

In the present embodiment, the first processing operation may be specifically a processing operation for a face. Specifically, the facial area in the live streaming image frame may be determined. Any face recognition manner may be used to implement recognition and extraction of the facial area. The first processing operation is performed on the at least one of the blemish area, the shadow area, and the highlight area in the facial area, to obtain the image frame to be processed. The blemish area may be an area with spots or pimples, the highlight area may be an overexposed area, and the shadow area may be an area with low darkness.

The whitening operation is performed on the entire live streaming image frame, and the skin soothing operation is performed on the facial area, so that the beautifying operation can be effectively performed on the live streaming image frame, and a live streaming effect of virtual reality live streaming can be improved.

FIG. 4 is a flow diagram of a method for processing a live streaming image frame provided by yet another embodiment of the present disclosure. Based on any one of the foregoing embodiments, as shown in FIG. 4, step 203 includes following steps.

Step 401: identifying a blemish area in the area to be processed, and performing a correction operation on the blemish area to obtain a first texture image.

Step 402: performing a color correction operation on the first texture image to obtain a second texture image.

Step 403: determining, based on the second texture image and the live streaming image frame, high-frequency area information corresponding to the live streaming image frame, and determining, according to the second texture image, underlying skin texture information corresponding to the live streaming image frame.

Step 404: performing a combination operation on the high-frequency area information and the underlying skin texture information to obtain the image frame to be processed.

In the present embodiment, the skin soothing operation on the live streaming image frame may specifically include an optimization operation on the blemish area such as spots or pimples and a correction operation on overall skin. Therefore, after the area to be processed is acquired, the blemish area in the area to be processed is first identified, and the correction operation is performed on the blemish area to obtain the first texture image.

Further, the color correction operation may be performed on the first texture image to achieve a purpose of brightening a skin curve and removing yellow and red colors, to obtain the second texture image. For the second texture image, the high-frequency area information corresponding to the live streaming image frame may be determined according to the second texture image and the live streaming image frame, and the underlying skin texture information corresponding to the live streaming image frame may be determined according to the second texture image. After layers are split, texture and details may be modified on a high-frequency layer without destroying original colors, and light and shade color blocks may be modified on a low-frequency layer without destroying details. The combination operation is performed on the high-frequency area information and the underlying skin texture information to obtain the image frame to be processed.

In the method for processing a live streaming image frame provided in the present embodiment, the blemish area in the area to be processed is optimized, and colors are corrected, so that the optimization operation on the area to be processed can be effectively implemented to achieve a beautifying effect. In addition, the high-frequency area information corresponding to the live streaming image frame and the underlying skin texture information corresponding to the live streaming image frame are determined. After the layers are split, the texture and details may be modified on the high-frequency layer without destroying the original colors, and the light and shade color blocks may be modified on the low-frequency layer without destroying details, further improving an optimization effect of the live streaming image frame.

Further, based on any one of the foregoing embodiments, step 401 includes:
performing, by using a bilateral filtering algorithm, blurring processing on the area to be processed in the live streaming image frame, to obtain a blurred image frame;
calculating a difference between the blurred image frame and the live streaming image frame; and
if a difference of any area is within a preset difference range, determining that the area is the blemish area.

In the present embodiment, when the blemish area is being identified, the blurring processing may be first performed on the area to be processed in the live streaming image frame. Specifically, the blurring processing may be performed on the area to be processed in the live streaming image frame by using the bilateral filtering algorithm, to obtain the blurred image frame. A viewport size of the bilateral filtering algorithm is (0.45 * image height, 0.45 * image width). A filter kernel size is 10 pixels.

Bilateral filtering is a non-linear filter, and can achieve effects of edge preservation, noise reduction, and smoothing. Similar to other filtering principles, the bilateral filtering also uses a weighted average method, and represents intensity of a pixel using a weighted average of brightness values of peripheral pixels. The weighted average is based on a Gaussian distribution. A weight of the bilateral filtering considers not only a Euclidean distance between pixels but also radiation difference (a similarity degree between a pixel and a center pixel in a convolution kernel, and a color intensity) in a pixel range domain. The two weights are considered when the center pixel is calculated.

Further, the difference between the blurred image frame and the live streaming image frame may be calculated. To implement the identification operation on the blemish area, a difference range may be preset. For a difference of any area, if the difference falls within the difference range, it is indicated that the area is the blemish area.

Further, based on any one of the foregoing embodiments, the performing a correction operation on the blemish area to obtain a first texture image includes:
performing, by using a preset pixel average value, a filling operation on the blemish area to obtain the first texture image.

In the present embodiment, since the blemish area is usually an area with a high pixel value or a low pixel value, the pixel average value may be preset. The pixel average value may be a pixel average value corresponding to pixels in the live streaming image frame.

The optimization operation on the blemish area is implemented by performing the filling operation on the blemish area with the pixel average value, to obtain the first texture image.

In the method for processing a live streaming image frame provided in the present embodiment, the blurring processing is performed on the area to be processed, and the difference between the blurred image frame and the live streaming image frame is calculated, so that the blemish area in the area to be processed can be accurately located. Further, the filling operation is performed on the blemish area based on the preset pixel average value, to implement correction of the blemish area and ensure a beautifying effect of the live streaming image frame.

Further, based on any one of the foregoing embodiments, step 402 includes:
acquiring a preset color channel in the first texture image as a grayscale image corresponding to the first texture image, and acquiring a preset first color lookup table corresponding to the first texture image;
determining, according to a preset grayscale value range, a target processing area in the grayscale image; and
performing, according to the first color lookup table, the color correction operation on the target processing area, to obtain the second texture image.

In the present embodiment, for the first texture image, since the first texture image is an RGB image, the preset color channel in the first texture image may be used as the grayscale image corresponding to the first texture image. For example, a blue channel may be used as the grayscale image corresponding to the first texture image.

After the grayscale image corresponding to the first texture image is obtained, light and shade details in the first texture image may be determined according to the grayscale image, and then a highlight area, a shadow area, and the like may be determined.

In an actual application, different images have different light and shadow characteristics. For example, for a live streaming image frame acquired at a position with high brightness, an overexposure problem may occur. Therefore, the highlight area needs to be adjusted. For a live streaming image frame acquired at a position with low brightness, a problem of low definition due to being too dark may occur. Therefore, a shadow part needs to be adjusted.

Therefore, for different application scenarios, the grayscale value range may be preset. The target processing area in the grayscale image is determined according to the grayscale value range. The preset first color lookup table corresponding to the first texture image is acquired. The first color lookup table can achieve a purpose of brightening a skin curve and removing yellow and red colors. The first color lookup table may be a lut graph with a best optimization effect during an adjustment process. The present disclosure does not limit a determination process of the first color lookup table. Therefore, the color correction operation may be performed on the target processing area according to the first color lookup table, to obtain the second texture image. Optionally, color mapping may be performed on the target processing area according to the first color lookup table, to implement color correction.

In the method for processing a live streaming image frame provided in the present embodiment, the preset color channel in the first texture image is acquired as the grayscale image corresponding to the first texture image, and the target processing area in the grayscale image is determined according to the preset grayscale value range, so that the optimization operation can be accurately performed on the target optimization area, and an optimization effect can better meet personalized requirements of the user. In addition, the color correction operation is performed on the target processing area according to the first color lookup table corresponding to the first texture image, so that the purpose of brightening the skin curve and removing the yellow and red colors can be achieved, and the optimization effect of the live streaming image frame is improved.

Further, based on any one of the foregoing embodiments, step 403 includes:
performing a first joint bilateral filtering operation on the second texture image to obtain a first blurring result;
calculating a difference between the first blurring result and the live streaming image frame to obtain the high-frequency area information;
performing a second joint bilateral filtering operation on the second texture image to obtain a second blurring result; and
determining the second blurring result as the underlying skin texture information corresponding to the live streaming image frame,
where a radius of a filter kernel of the second joint bilateral filtering operation is greater than a radius of a filter kernel of the first joint bilateral filtering operation.

In the present embodiment, to further improve the optimization effect, after the second texture image is acquired, the first joint bilateral filtering operation may be performed on the second texture image to obtain the first blurring result. The first joint bilateral filtering operation may be joint bilateral filtering processing with a small radius. Further, the difference between the first blurring result and the live streaming image frame may be calculated to obtain the high-frequency area information. The second joint bilateral filtering operation is performed on the second texture image to obtain the second blurring result. The second blurring result is determined as the underlying skin texture information corresponding to the live streaming image frame. The second joint bilateral filtering operation may be joint bilateral filtering processing with a large radius. Optionally, the radius of the filter kernel of the second joint bilateral filtering operation is greater than the radius of the filter kernel of the first joint bilateral filtering operation. Preferably, the radius of the filter kernel of the second joint bilateral filtering operation may be twice the radius of the filter kernel of the first joint bilateral filtering operation.

Further, based on any one of the foregoing embodiments, step 404 includes:
performing a combination operation on the high-frequency area information and the underlying skin texture information in a linear light blending mode, to obtain the image frame to be processed.

In the present embodiment, specifically, the linear light blending mode may be used to implement the combination operation on the high-frequency area information and the underlying skin texture information, to obtain the image frame to be processed.

Further, based on any one of the foregoing embodiments, after step 404, the method further includes:
performing sharpening processing on the image frame to be processed to obtain a processed image frame to be processed.

Step 204 includes:
performing the second processing operation on the processed image frame to be processed, to obtain the processed target image frame.

In the present embodiment, after the image frame to be processed is obtained, the sharpening processing may be further performed on the image frame to be processed as a final skin soothing result, to obtain the processed image frame to be processed. Further, a subsequent second processing operation may be performed according to the processed image frame to be processed, to obtain the processed target image frame.

In the method for processing a live streaming image frame provided in the present embodiment, one image is split into a high-frequency layer and a low-frequency layer. Therefore, texture and details may be modified on the high-frequency layer without destroying original colors, and light and shade color blocks may be modified on the low-frequency layer without destroying details, improving an optimization effect of the live streaming image frame.

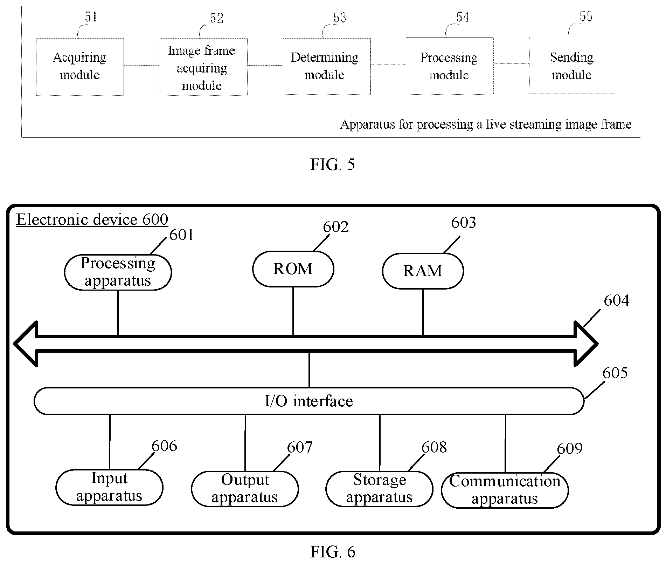

FIG. 5 is a structural diagram of an apparatus for processing a live streaming image frame according to an embodiment of the present disclosure. As shown in FIG. 5, the apparatus includes: an acquiring module 51, an image frame acquiring module 52, a determining module 53, a processing module 54, and a sending module 55. The acquiring module 51 is configured to acquire an image frame processing request. The image frame acquiring module 52 is configured to acquire, according to the image frame processing request, a live streaming image frame corresponding to virtual reality live streaming content. The determining module 53 is configured to determine an area to be processed in the live streaming image frame, and perform a first processing operation on the area to be processed, to obtain an image frame to be processed. The processing module 54 is configured to perform a global second processing operation on the image frame to be processed, to obtain a processed target image frame. The sending module 55 is configured to display the target image frame.

Further, based on any one of the foregoing embodiments, the image frame acquiring module is configured to: acquire two image frames to be combined that are acquired by at least two cameras; and perform a combining operation on the two image frames to be combined, to obtain the live streaming image frame.

Further, based on any one of the foregoing embodiments, the determining module is configured to: perform an identification operation on the live streaming image frame, to obtain key points corresponding to respective target objects in the live streaming image frame; determine, according to the key points and a preset target mask, a target area where respective target objects are located; and determine a non-processing area in the target area, and adjust a pixel value corresponding to the non-processing area to a preset value, to obtain the area to be processed.

Further, based on any one of the foregoing embodiments, the determining module is configured to: convert the live streaming image frame from an RGB image to an HSV image, and determine a first non-processing area in the target area based on a hue and a value of the HSV image as constraint information; determine a second non-processing area in the target area by adjusting a layer corresponding to the target mask; and set pixel values corresponding to the first non-processing area and the second non-processing area in the target area to zero, to obtain the area to be processed.

Further, based on any one of the foregoing embodiments, the determining module is configured to: determine a facial area in the live streaming image frame; and perform the first processing operation on at least one of a blemish area, a shadow area, and a highlight area in the facial area, to obtain the image frame to be processed.

Further, based on any one of the foregoing embodiments, the determining module is configured to: identify a blemish area in the area to be processed, and perform a correction operation on the blemish area to obtain a first texture image; perform a color correction operation on the first texture image to obtain a second texture image; determine, based on the second texture image and the live streaming image frame, high-frequency area information corresponding to the live streaming image frame, and determine, according to the second texture image, underlying skin texture information corresponding to the live streaming image frame; and perform a combination operation on the high-frequency area information and the underlying skin texture information to obtain the image frame to be processed.

Further, based on any one of the foregoing embodiments, the determining module is configured to: perform, by using a bilateral filtering algorithm, blurring processing on the area to be processed in the live streaming image frame, to obtain a blurred image frame; calculate a difference between the blurred image frame and the live streaming image frame; and if a difference of any area is within a preset difference range, determine that the area is the blemish area.

Further, based on any one of the foregoing embodiments, the determining module is configured to: perform, by using a preset pixel average value, a filling operation on the blemish area to obtain the first texture image.

Further, based on any one of the foregoing embodiments, the determining module is configured to: acquire a preset color channel in the first texture image as a grayscale image corresponding to the first texture image, and acquire a preset first color lookup table corresponding to the first texture image; determine, according to a preset grayscale value range, a target processing area in the grayscale image; and perform, according to the first color lookup table, the color correction operation on the target processing area, to obtain the second texture image.

Further, based on any one of the foregoing embodiments, the determining module is configured to: perform a first joint bilateral filtering operation on the second texture image to obtain a first blurring result; calculate a difference between the first blurring result and the live streaming image frame to obtain the high-frequency area information; perform a second joint bilateral filtering operation on the second texture image to obtain a second blurring result; and determine the second blurring result as the underlying skin texture information corresponding to the live streaming image frame, where a radius of a filter kernel of the second joint bilateral filtering operation is greater than a radius of a filter kernel of the first joint bilateral filtering operation.

Further, based on any one of the foregoing embodiments, the determining module is configured to: perform a combination operation on the high-frequency area information and the underlying skin texture information in a linear light blending mode, to obtain the image frame to be processed.

Further, based on any one of the foregoing embodiments, the apparatus further includes: a sharpening module configured to perform sharpening processing on the image frame to be processed to obtain a processed image frame to be processed. The processing module is configured to: perform the global second processing operation on the processed image frame to be processed, to obtain the processed target image frame.

Further, based on any one of the foregoing embodiments, the processing module is configured to: perform the global second processing operation on the image frame to be processed according to a second color lookup table corresponding to the image frame to be processed, to obtain the processed target image frame.

The device provided in the present embodiment may be configured to perform the technical solutions in the method embodiments described above, and implementation principles and technical effects thereof are similar, which will not be repeated in the present embodiment.

To implement the foregoing embodiments, an embodiment of the present disclosure further provides an electronic device, including: a processor and a memory.

The memory stores computer-executable instructions.

The processor executes the computer-executable instructions stored in the memory, to enable the processor to perform the method for processing a live streaming image frame according to any one of the foregoing embodiments.

FIG. 6 is a structural diagram of an electronic device provided by an embodiment of the present disclosure. As shown in FIG. 6, the electronic device 600 may be a terminal device or a server. The terminal device may include, but is not limited to, mobile terminals such as a mobile phone, a notebook computer, a digital broadcast receiver, a personal digital assistant (Personal Digital Assistant, abbreviated as PDA), a tablet computer (Portable Android Device, abbreviated as PAD), and a portable media player (Portable Media Player, abbreviated as PMP), and fixed terminals such as a digital TV and a desktop computer. The electronic device shown in FIG. 6 is merely an example, and shall not impose any limitation on functions and scope of use of the embodiments of the present disclosure.

As shown in FIG. 6, the electronic device 600 may include a processing apparatus (for example, a central processor, a graphics processor, etc.) 601 that may execute a variety of appropriate actions and processing according to a program stored in a read-only memory (Read Only Memory, abbreviated as ROM) 602 or a program loaded from a storage apparatus 608 into a random access memory (Random Access Memory, abbreviated as RAM) 603. The RAM 603 further stores various programs and data required for operations of the electronic device 600. The processing apparatus 601, the ROM 602, and the RAM 603 are connected to each other via a bus 604. An input/output (Input/Output, abbreviated as I/O) interface 605 is also connected to the bus 604.

Generally, following apparatuses may be connected to the I/O interface 605: an input apparatus 606 including, for example, a touch screen, a touchpad, a keyboard, a mouse, a camera, a microphone, an accelerometer, and a gyroscope, etc.; an output apparatus 607 including, for example, a liquid crystal display (Liquid Crystal Display, abbreviated as LCD), a speaker, and a vibrator, etc.; the storage apparatus 608 including, for example, a tape and a hard disk, etc.; and a communication apparatus 609. The communication apparatus 609 may allow the electronic device 600 to perform wireless or wired communication with other devices to exchange data. Although FIG. 6 shows the electronic device 600 having various apparatuses, it should be understood as an illustration, and not as a limitation to the implementation or the scope of use of the embodiments of the present disclosure. It may be an alternative to implement or provide more or fewer apparatuses.

In particular, according to an embodiment of the present disclosure, the processes described above with reference to the flow diagrams may be implemented as a computer software program. For example, this embodiment of the present disclosure includes a computer program product, which includes a computer program carried on a computer-readable medium, where the computer program includes program code for executing the methods shown in the flow diagrams. In such an embodiment, the computer program may be downloaded from a network through the communication apparatus 609, or installed from the storage apparatus 608, or installed from the ROM 602. When the computer program is executed by the processing apparatus 601, the above-mentioned functions defined in the methods of the embodiments of the present disclosure are executed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a RAM, a ROM, an erasable programmable read only memory (Erasable Programmable Read Only Memory, abbreviated as EPROM) or a flash memory, an optic fiber, a portable compact disk read only memory (Compact Disk Read Only Memory, abbreviated as CD-ROM), an optical storage device, a magnetic storage device, or any suitable combination thereof. In the present disclosure, the computer-readable storage medium may be any tangible medium containing or storing a program which may be used by or in combination with an instruction execution system, an apparatus, or a device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, an apparatus, or a device. The program code contained in the computer-readable medium may be transmitted by any suitable medium, including but not limited to: electric wires, optical cables, radio frequency (Radio Frequency, abbreviated as RF), etc., or any suitable combination thereof.

An embodiment of the present disclosure further provides a computer-readable storage medium storing computer-executable instructions that, when executed by a processor, cause the method for processing a live streaming image frame according to any one of the foregoing embodiments to be implemented.

An embodiment of the present disclosure further provides a computer program product including a computer program that, when executed by a processor, causes the method for processing a live streaming image frame according to any one of the foregoing embodiments to be implemented.

An embodiment of the present disclosure further provides a computer program that, when executed by a processor, causes the method for processing a live streaming image frame according to any one of the foregoing embodiments to be implemented.

The foregoing computer-readable medium may be contained in the foregoing electronic device. Alternatively, the computer-readable medium may exist independently, without being assembled into the electronic device.

The computer-readable medium carries one or more programs that, when executed by the electronic device, cause the electronic device to execute the methods shown in the foregoing embodiments.

Computer program codes for executing operations in the present disclosure may be written in one or more programming languages or a combination thereof, where the programming languages include an object-oriented programming language, such as Java, Smalltalk, and C++, and further include conventional procedural programming languages, such as "C" language or similar programming languages. The program codes may be completely executed on a computer of a user, partially executed on a computer of a user, executed as an independent software package, partially executed on a computer of a user and partially executed on a remote computer, or completely executed on a remote computer or server. In the circumstance involving a remote computer, the remote computer may be connected to the computer of the user over any type of network, including a local area network (Local Area Network, abbreviated as LAN) or a wide area network (Wide Area Network, abbreviated as WAN), or may be connected to an external computer (for example, connected over the Internet using an Internet service provider).

The flow diagrams and the block diagrams in the drawings illustrate possibly implemented architecture, functions, and operations of the system, the method, and the computer program product according to various embodiments of the present disclosure. In this regard, each block in the flow diagrams or the block diagrams may represent a module, a program segment, or a part of code, and the module, the program segment, or the part of codes contains one or more executable instructions for implementing specified logical functions. It should also be noted that, in some alternative implementations, functions marked in the blocks may also occur in an order different from that marked in the drawings. For example, two blocks shown in succession may actually be executed substantially in parallel, or they may sometimes be executed in a reverse order, depending on a function involved. It should also be noted that each block in the block diagrams and/or the flow diagrams, and a combination of blocks in the block diagrams and/or the flow diagrams may be implemented by a dedicated hardware-based system that executes specified functions or operations, or may be implemented by a combination of dedicated hardware and computer instructions.

Related units described in the embodiments of the present disclosure may be implemented by means of software, or may be implemented by means of hardware. A name of a unit does not constitute a limitation on the unit itself in some cases, for example, a first acquiring unit may also be described as "a unit for acquiring at least two Internet protocol addresses".

The functions described herein above may be executed at least partially by one or more hardware logic components. For example, without limitation, exemplary types of hardware logic components that may be used include: a field programmable gate array (Field Programmable Gate Array, abbreviated as FPGA), an application-specific integrated circuit (Application Specific Integrated Circuit, abbreviated as ASIC), application-specific standard parts (Application Specific Standard Parts, abbreviated as ASSP), a system on chip (System on Chip, abbreviated as SOC), a complex programmable logic device (Complex Programmable Logic Device, abbreviated as CPLD), and the like.

In the context of the present disclosure, a machine-readable medium may be a tangible medium that may contain or store a program used by or in combination with an instruction execution system, an apparatus, or a device. The machine-readable medium may be a machine-readable signal medium or a machine-readable storage medium. The machine-readable medium may include but is not limited to electronic, magnetic, optical, electromagnetic, infrared, or semiconductor systems, apparatus, or devices, or any suitable combination thereof. A more specific example of the machine-readable storage medium may include an electrical connection according to one or more wires, a portable computer disk, a hard disk, a RAM, a ROM, an EPROM or a flash memory, an optic fiber, a CD-ROM, an optical storage device, a magnetic storage device, or any suitable combination thereof.

In a first aspect, according to one or more embodiments of the present disclosure, a method for processing a live streaming image frame is provided, including:
acquiring an image frame processing request;
acquiring, according to the image frame processing request, a live streaming image frame corresponding to virtual reality live streaming content;
determining an area to be processed in the live streaming image frame, and performing a first processing operation on the area to be processed, to obtain an image frame to be processed;
performing a global second processing operation on the image frame to be processed, to obtain a processed target image frame; and
displaying the target image frame.

According to one or more embodiments of the present disclosure, the acquiring a live streaming image frame corresponding to virtual reality live streaming content includes:
acquiring two image frames to be combined that are acquired by at least two cameras; and
performing a combining operation on the two image frames to be combined, to obtain the live streaming image frame.

According to one or more embodiments of the present disclosure, the determining an area to be processed in the live streaming image frame includes:
performing an identification operation on the live streaming image frame, to obtain key points corresponding to respective target objects in the live streaming image frame;
determining, according to the key points and a preset target mask, a target area where respective target objects are located; and
determining a non-processing area in the target area, and adjusting a pixel value corresponding to the non-processing area to a preset value, to obtain the area to be processed.

According to one or more embodiments of the present disclosure, the determining a non-processing area in the target area, and adjusting a pixel value corresponding to the non-processing area to a preset value includes:
converting the live streaming image frame from an RGB image to an HSV image, and determining a first non-processing area in the target area based on a hue and a value of the HSV image as constraint information;
determining a second non-processing area in the target area by adjusting a layer corresponding to the target mask; and
setting pixel values corresponding to the first non-processing area and the second non-processing area in the target area to zero, to obtain the area to be processed.

According to one or more embodiments of the present disclosure, the determining an area to be processed in the live streaming image frame, and performing a first processing operation on the area to be processed, to obtain an image frame to be processed includes:
determining a facial area in the live streaming image frame; and
performing the first processing operation on at least one of a blemish area, a shadow area, and a highlight area in the face area, to obtain the image frame to be processed.

According to one or more embodiments of the present disclosure, the performing a first processing operation on the area to be processed, to obtain an image frame to be processed includes:
identifying a blemish area in the area to be processed, and performing a correction operation on the blemish area to obtain a first texture image;
performing a color correction operation on the first texture image to obtain a second texture image;
determining, based on the second texture image and the live streaming image frame, high-frequency area information corresponding to the live streaming image frame, and determining, according to the second texture image, underlying skin texture information corresponding to the live streaming image frame; and
performing a combination operation on the high-frequency area information and the underlying skin texture information to obtain the image frame to be processed.

According to one or more embodiments of the present disclosure, the identifying a blemish area in the area to be processed includes:
performing, by using a bilateral filtering algorithm, blurring processing on the area to be processed in the live streaming image frame, to obtain a blurred image frame;
calculating a difference between the blurred image frame and the live streaming image frame; and
if a difference of any area is within a preset difference range, determining that the area is the blemish area.

According to one or more embodiments of the present disclosure, the performing a correction operation on the blemish area to obtain a first texture image includes:
performing, by using a preset pixel average value, a filling operation on the blemish area to obtain the first texture image.

According to one or more embodiments of the present disclosure, the performing a color correction operation on the first texture image to obtain a second texture image includes:
acquiring a preset color channel in the first texture image as a grayscale image corresponding to the first texture image, and acquiring a preset first color lookup table corresponding to the first texture image;
determining, according to a preset grayscale value range, a target processing area in the grayscale image; and
performing, according to the first color lookup table, the color correction operation on the target processing area, to obtain the second texture image.

According to one or more embodiments of the present disclosure, the determining, based on the second texture image and the live streaming image frame, high-frequency area information corresponding to the live streaming image frame, and determining, according to the second texture image, underlying skin texture information corresponding to the live streaming image frame includes:
performing a first joint bilateral filtering operation on the second texture image to obtain a first blurring result;
calculating a difference between the first blurring result and the live streaming image frame to obtain the high-frequency area information;
performing a second joint bilateral filtering operation on the second texture image to obtain a second blurring result; and
determining the second blurring result as the underlying skin texture information corresponding to the live streaming image frame,
where a radius of a filter kernel of the second joint bilateral filtering operation is greater than a radius of a filter kernel of the first joint bilateral filtering operation.

According to one or more embodiments of the present disclosure, the performing a combination operation on the high-frequency area information and the underlying skin texture information to obtain the image frame to be processed includes:
performing a combination operation on the high-frequency area information and the underlying skin texture information in a linear light blending mode, to obtain the image frame to be processed.

According to one or more embodiments of the present disclosure, after the performing a combination operation on the high-frequency area information and the underlying skin texture information to obtain the image frame to be processed, the method further includes:
performing sharpening processing on the image frame to be processed to obtain a processed image frame to be processed;
the performing a global second processing operation on the image frame to be processed, to obtain a processed target image frame includes:
   performing the global second processing operation on the processed image frame to be processed, to obtain the processed target image frame.

According to one or more embodiments of the present disclosure, the performing the global second processing operation on the image frame to be processed, to obtain the processed target image frame includes:
performing, according to a second color lookup table corresponding to the image frame to be processed, the global second processing operation on the image frame to be processed, to obtain the processed target image frame.

In a second aspect, according to one or more embodiments of the present disclosure, a system for processing a live streaming image frame is provided, including: a terminal device, a binocular image acquisition apparatus, and a virtual reality device, where
the binocular image acquisition apparatus is configured to acquire a live streaming image frame corresponding to virtual reality live streaming content;
the terminal device is configured to acquire an image frame processing request, and acquire, according to the image frame processing request, the live streaming image frame corresponding to the virtual reality live streaming content; determine an area to be processed in the live streaming image frame, and perform a first processing operation on the area to be processed, to obtain an image frame to be processed; perform a global second processing operation on the image frame to be processed, to obtain a processed target image frame; and send the target image frame to the virtual reality device; and
the virtual reality device is configured to display the target image frame.

In a third aspect, according to one or more embodiments of the present disclosure, an apparatus for processing a live streaming image frame is provided, including:
an acquiring module configured to acquire an image frame processing request;
an image frame acquiring module configured to acquire, according to the image frame processing request, a live streaming image frame corresponding to virtual reality live streaming content;
a determining module configured to determine an area to be processed in the live streaming image frame, and perform a first processing operation on the area to be processed, to obtain an image frame to be processed;
a processing module configured to perform a global second processing operation on the image frame to be processed, to obtain a processed target image frame; and
a sending module configured to display the target image frame.

According to one or more embodiments of the present disclosure, the image frame acquiring module is configured to:
acquire two image frames to be combined that are acquired by at least two cameras; and
perform a combining operation on the two image frames to be combined, to obtain the live streaming image frame.

According to one or more embodiments of the present disclosure, the determining module is configured to:
perform an identification operation on the live streaming image frame, to obtain key points corresponding to respective target objects in the live streaming image frame;
determine, according to the key points and a preset target mask, a target area where respective target objects are located; and
determine a non-processing area in the target area, and adjust a pixel value corresponding to the non-processing area to a preset value, to obtain the area to be processed.

According to one or more embodiments of the present disclosure, the determining module is configured to:
convert the live streaming image frame from an RGB image to an HSV image, and determine a first non-processing area in the target area based on a hue and a value of the HSV image as constraint information;
determine a second non-processing area in the target area by adjusting a layer corresponding to the target mask; and
set pixel values corresponding to the first non-processing area and the second non-processing area in the target area to zero, to obtain the area to be processed.

According to one or more embodiments of the present disclosure, the determining module is configured to:
determine a facial area in the live streaming image frame; and
perform the first processing operation on at least one of a blemish area, a shadow area, and a highlight area in the facial area, to obtain the image frame to be processed.

According to one or more embodiments of the present disclosure, the determining module is configured to:
identify a blemish area in the area to be processed, and perform a correction operation on the blemish area to obtain a first texture image;
perform a color correction operation on the first texture image to obtain a second texture image;
determine, based on the second texture image and the live streaming image frame, high-frequency area information corresponding to the live streaming image frame, and determine, according to the second texture image, underlying skin texture information corresponding to the live streaming image frame; and
perform a combination operation on the high-frequency area information and the underlying skin texture information to obtain the image frame to be processed.

According to one or more embodiments of the present disclosure, the determining module is configured to:
perform, by using a bilateral filtering algorithm, blurring processing on the area to be processed in the live streaming image frame, to obtain a blurred image frame;
calculate a difference between the blurred image frame and the live streaming image frame; and
if a difference of any area is within a preset difference range, determine that the area is the blemish area.

According to one or more embodiments of the present disclosure, the determining module is configured to:
perform, by using a preset pixel average value, a filling operation on the blemish area to obtain the first texture image.

According to one or more embodiments of the present disclosure, the determining module is configured to:
acquire a preset color channel in the first texture image as a grayscale image corresponding to the first texture image, and acquire a preset first color lookup table corresponding to the first texture image;
determine, according to a preset grayscale value range, a target processing area in the grayscale image; and
perform, according to the first color lookup table, the color correction operation on the target processing area to obtain the second texture image.

According to one or more embodiments of the present disclosure, the determining module is configured to:
perform a first joint bilateral filtering operation on the second texture image to obtain a first blurring result;
calculate a difference between the first blurring result and the live streaming image frame to obtain the high-frequency area information;
perform a second joint bilateral filtering operation on the second texture image to obtain a second blurring result; and
determine the second blurring result as the underlying skin texture information corresponding to the live streaming image frame,
where a radius of a filter kernel of the second joint bilateral filtering operation is greater than a radius of a filter kernel of the first joint bilateral filtering operation.

According to one or more embodiments of the present disclosure, the determining module is configured to:
perform a combination operation on the high-frequency area information and the underlying skin texture information in a linear light blending mode, to obtain the image frame to be processed.

According to one or more embodiments of the present disclosure, the apparatus further includes:
a sharpening module configured to perform sharpening processing on the image frame to be processed to obtain a processed image frame to be processed; and
the processing module is configured to:
   perform the global second processing operation on the processed image frame to be processed, to obtain the processed target image frame.

According to one or more embodiments of the present disclosure, the processing module is configured to: perform the global second processing operation on the image frame to be processed according to a second color lookup table corresponding to the image frame to be processed, to obtain the processed target image frame.

In a fourth aspect, according to one or more embodiments of the present disclosure, an electronic device is provided, including: at least one processor and a memory;
the memory stores computer-executable instructions; and
the at least one processor executes the computer-executable instructions stored in the memory, to enable the at least one processor to perform the method for processing a live streaming image frame according to the first aspect and the various possible designs of the first aspect described above.

In a fifth aspect, according to one or more embodiments of the present disclosure, a computer-readable storage medium is provided, storing computer-executable instructions that, when executed by a processor, cause the method for processing a live streaming image frame according to the first aspect and the various possible designs of the first aspect described above to be implemented.

In a sixth aspect, according to one or more embodiments of the present disclosure, a computer program product is provided, including a computer program that, when executed by a processor, causes the method for processing a live streaming image frame according to the first aspect and the various possible designs of the first aspect described above to be implemented.

In a seventh aspect, according to one or more embodiments of the present disclosure, a computer program is provided, where the computer program, when executed by a processor, causes the method for processing a live streaming image frame according to the first aspect and the various possible designs of the first aspect described above to be implemented.

In the method and the apparatus for processing a live streaming image frame, the electronic device, the computer-readable storage medium, the computer program product, and the computer program provided in the embodiments, a live streaming image frame corresponding to virtual reality live streaming content is acquired according to an image frame processing request, a first processing operation is performed on an area to be processed in the live streaming image frame, a global second processing operation is performed on the image frame to be processed after the first processing operation, and a target image frame after the second processing operation is sent to a preset terminal device for display, to implement an image processing operation in a virtual reality scenario. In addition, the first processing operation is performed on the area to be processed, and the second processing operation is performed on the whole, so that a calculation amount in an image processing process can be effectively reduced, and efficiency of image processing is improved. Therefore, a high-quality live streaming effect can be ensured.

The foregoing descriptions are merely preferred embodiments of the present disclosure and explanations of the applied technical principles. A person skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the above disclosure concept, for example, a technical solution formed by replacing the foregoing features with technical features having similar functions disclosed in the present disclosure (but not limited thereto).

In addition, although the operations are depicted in a specific order, it should not be understood as requiring these operations to be executed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments may also be implemented in combination in a single embodiment. In contrast, various features described in a single embodiment may also be implemented in a plurality of embodiments individually or in any suitable subcombination.

Although the subject matter has been described in a language specific to structural features and/or logical actions of methods, it should be understood that the subject matter defined in the appended claims is not necessarily limited to the specific features or actions described above. In contrast, the specific features and actions described above are merely exemplary forms of implementing the claims.

## Claims

1. A method for processing a live streaming image frame, comprising:
acquiring an image frame processing request;
acquiring, according to the image frame processing request, a live streaming image frame corresponding to virtual reality live streaming content;
determining an area to be processed in the live streaming image frame, and performing a first processing operation on the area to be processed, to obtain an image frame to be processed;
performing a global second processing operation on the image frame to be processed, to obtain a processed target image frame; and
displaying the target image frame.

2. The method according to claim 1, wherein the acquiring a live streaming image frame corresponding to virtual reality live streaming content comprises:
acquiring two image frames to be combined that are acquired by at least two cameras; and
performing a combining operation on the two image frames to be combined, to obtain the live streaming image frame.

3. The method according to claim 1 or 2, wherein the determining an area to be processed in the live streaming image frame comprises:
performing an identification operation on the live streaming image frame, to obtain key points corresponding to respective target objects in the live streaming image frame;
determining, according to the key points and a preset target mask, a target area where the respective target objects are located; and
determining a non-processing area in the target area, and adjusting a pixel value corresponding to the non-processing area to a preset value, to obtain the area to be processed.

4. The method according to claim 3, wherein the determining a non-processing area in the target area, and adjusting a pixel value corresponding to the non-processing area to a preset value comprises:
converting the live streaming image frame from an RGB image to an HSV image, and determining a first non-processing area in the target area based on a hue and a value of the HSV image as constraint information;
determining a second non-processing area in the target area by adjusting a layer corresponding to the target mask; and
setting pixel values corresponding to the first non-processing area and the second non-processing area in the target area to zero, to obtain the area to be processed.

5. The method according to any one of claims 1 to 4, wherein the determining an area to be processed in the live streaming image frame, and performing a first processing operation on the area to be processed, to obtain an image frame to be processed comprises:
determining a facial area in the live streaming image frame; and
performing the first processing operation on at least one of a blemish area, a shadow area, and a highlight area in the facial area, to obtain the image frame to be processed.

6. The method according to any one of claims 1 to 4, wherein the area to be processed is a facial area; and the performing a first processing operation on the area to be processed, to obtain an image frame to be processed comprises:
identifying a blemish area in the area to be processed, and performing a correction operation on the blemish area to obtain a first texture image;
performing a color correction operation on the first texture image to obtain a second texture image;
determining, based on the second texture image and the live streaming image frame, high-frequency area information corresponding to the live streaming image frame, and determining, according to the second texture image, underlying skin texture information corresponding to the live streaming image frame; and
performing a combination operation on the high-frequency area information and the underlying skin texture information to obtain the image frame to be processed.

7. The method according to claim 6, wherein the identifying a blemish area in the area to be processed comprises:
performing, by using a bilateral filtering algorithm, blurring processing on the area to be processed in the live streaming image frame, to obtain a blurred image frame;
calculating a difference between the blurred image frame and the live streaming image frame; and
if a difference of any area is within a preset difference range, determining that the area is the blemish area.

8. The method according to claim 6 or 7, wherein the performing a correction operation on the blemish area to obtain a first texture image comprises:
performing, by using a preset pixel average value, a filling operation on the blemish area to obtain the first texture image.

9. The method according to any one of claims 6 to 8, wherein the performing a color correction operation on the first texture image to obtain a second texture image comprises:
acquiring a preset color channel in the first texture image as a grayscale image corresponding to the first texture image, and acquiring a preset first color lookup table corresponding to the first texture image;
determining, according to a preset grayscale value range, a target processing area in the grayscale image; and
performing, according to the first color lookup table, the color correction operation on the target processing area, to obtain the second texture image.

10. The method according to any one of claims 6 to 9, wherein the determining, based on the second texture image and the live streaming image frame, high-frequency area information corresponding to the live streaming image frame, and determining, according to the second texture image, underlying skin texture information corresponding to the live streaming image frame comprises:
performing a first joint bilateral filtering operation on the second texture image to obtain a first blurring result;
calculating a difference between the first blurring result and the live streaming image frame to obtain the high-frequency area information;
performing a second joint bilateral filtering operation on the second texture image to obtain a second blurring result; and
determining the second blurring result as the underlying skin texture information corresponding to the live streaming image frame,
wherein a radius of a filter kernel of the second joint bilateral filtering operation is greater than a radius of a filter kernel of the first joint bilateral filtering operation.

11. The method according to any one of claims 6 to 10, wherein the performing a combination operation on the high-frequency area information and the underlying skin texture information to obtain the image frame to be processed comprises:
performing a combination operation on the high-frequency area information and the underlying skin texture information in a linear light blending mode, to obtain the image frame to be processed.

12. The method according to any one of claims 6 to 11, wherein after the performing a combination operation on the high-frequency area information and the underlying skin texture information to obtain the image frame to be processed, the method further comprises:
performing sharpening processing on the image frame to be processed to obtain a processed image frame to be processed; and
the performing a global second processing operation on the image frame to be processed, to obtain a processed target image frame comprises:
performing the global second processing operation on the processed image frame to be processed, to obtain the processed target image frame.

13. The method according to any one of claims 1 to 4, wherein the performing a global second processing operation on the image frame to be processed, to obtain a processed target image frame comprises:
performing, according to a second color lookup table corresponding to the image frame to be processed, the global second processing operation on the image frame to be processed, to obtain the processed target image frame.

14. A system for processing a live streaming image frame, comprising: a terminal device, a binocular image acquisition apparatus, and a virtual reality device, wherein
the binocular image acquisition apparatus is configured to acquire a live streaming image frame corresponding to virtual reality live streaming content;
the terminal device is configured to acquire an image frame processing request, and acquire, according to the image frame processing request, the live streaming image frame corresponding to the virtual reality live streaming content; determine an area to be processed in the live streaming image frame, and perform a first processing operation on the area to be processed, to obtain an image frame to be processed; perform a global second processing operation on the image frame to be processed, to obtain a processed target image frame; and send the target image frame to the virtual reality device; and
the virtual reality device is configured to display the target image frame.

15. An apparatus for processing a live streaming image frame, comprising:
an acquiring module configured to acquire an image frame processing request;
an image frame acquiring module configured to acquire, according to the image frame processing request, a live streaming image frame corresponding to virtual reality live streaming content;
a determining module configured to determine an area to be processed in the live streaming image frame, and perform a first processing operation on the area to be processed, to obtain an image frame to be processed;
a processing module configured to perform a global second processing operation on the image frame to be processed, to obtain a processed target image frame; and
a sending module configured to display the target image frame.

16. An electronic device, comprising: a processor and a memory,
wherein the memory stores a computer-executable instruction; and
the processor executes the computer-executable instruction stored in the memory, to enable the processor to execute the method for processing a live streaming image frame according to any one of claims 1 to 13.

17. A computer-readable storage medium storing a computer-executable instruction that, when executed by a processor, cause the method for processing a live streaming image frame according to any one of claims 1 to 13 to be implemented.

18. A computer program product comprising a computer program that, when executed by a processor, causes the method for processing a live streaming image frame according to any one of claims 1 to 13 to be implemented.

19. A computer program that, when executed by a processor, causes the method for processing a live streaming image frame according to any one of claims 1 to 13 to be implemented.
